# EUROPEAN PATENT APPLICATION

(11) **EP 2 555 147 A1**
(43) Date of publication of application: **06.02.2013**
(21) Application number: 11762436.1
(22) Date of filing: 28.02.2011
(51) Int. Cl.: G06Q 30/00, G06Q 10/00

(54) **EXPENDABLE COMPONENT SALES SYSTEM, ELECTRONIC STORE PROVISION DEVICE, CONTROL METHOD, AND PROGRAM**

(30) Priority: 31.03.2010 JP 2010081350
(71) Applicant: Mitsubishi Heavy Industries, Ltd., Tokyo 108-8215 (JP)
(72) Inventor: WATANABE Hideyuki, Tokyo 108-8215 (JP); HIROE Takaharu, Tokyo 108-8215 (JP); MORI Keisuke, Tokyo 108-8215 (JP); ISHII Ren, Sagamihara-shi Kanagawa 252-5293 (JP)
(74) Representative: Henkel, Breuer & Partner
(86) International application number: PCT/JP2011/054471
(87) International publication number: WO 2011/122196

(57) **Abstract**

A consumable component sales system of the invention is a consumable component sales system that sells, at an electronic store, a plurality of consumable components to be periodically replaced, among a number of components constituting a machine. The consumable component sales system includes an electronic store providing device that provides an electronic store through a communication line to a customer terminal used by a customer. The electronic store providing device includes a correlation value data receiving unit, a time-for-replacement estimating unit, a recommended replacement component specifying unit, a sales page generating unit, and a web page transmitting unit.

## Description

### [Field of the Invention]

The present invention relates to a consumable component sales system, an electronic store providing device, a control method, and a program. More specifically, the present invention relates to a consumable component sales system that sells, at an electronic store, a plurality of consumable components to be replaced periodically among a number of components constituting a machine, an electronic store providing device that provides the electronic store through a communication line to a customer terminal used by a customer, a control method for controlling the electronic store providing device, and a program for the electronic store providing device.
Priority is claimed on Japanese Patent Application No. 2010-081350, filed March 31, 2010, the content of which is incorporated herein by reference.

### [Description of Related Art]

There is a plurality of consumable components that is to be replaced periodically, among a number of components constituting a machine.
A field engineer of a vendor who sold a machine formulates plans on a periodic inspection date, the details of inspection, and the like by referring to the number of days elapsed after the use start date of the machine, the operation hours after the use start date of the machine, or the like. Specifically, when formulating periodic inspection, the field engineer visits the user of the machine and acquires data such as the operation hours after the use start date of the machine. The field engineer comes back with the acquired data and formulates plans on a periodic inspection date, the details of inspection, and the like by referring to the number of days elapsed after the use start date of the machine.

For such consumable components, the time when the consumable components are to be replaced is determined by a periodic number of days or the operation hours of the machine. Thus, the periodic inspection date of the machine occurs in accordance with the time for replacement of a consumable component having the shortest interval of the periodic replacement dates. The field engineer formulates plans on which consumable component will be replaced on the periodic inspection date. The field engineer places an order for the consumable component replaced by the periodic inspection.

Meanwhile, a component ordering system that orders replacement components for a delivered device (for example, see Patent Document 1). In this system, a replacement component is specified using an image showing an exploded structure of the device. In this case, by selecting a target component within the image showing the exploded structure, a component to be ordered is selected.

### [Prior Art Document]

### [Patent Document]

[Patent Document 1] Japanese Unexamined Patent Application, First Publication No.2002-203149

### SUMMARY OF THE INVENTION

### [Problems to be Solved by the Invention] [0006]

As above, a field engineer of a vendor who sold a machine visits the user of the machine to acquire data, comes back with the acquired data, and formulates plans on the periodic inspection. However, the operation hours of the machine continue to increase even when the field engineer is formulating plans on the periodic inspection. Thus, according to this method, a consumable component which did not require replacement according to the operation hours when the field engineer acquired the data may become the subject requiring replacement on the actual periodic inspection date.

### [Means for Solving the Problem]

In order to solve the above problems, the present invention employs the following means.
A consumable component sales system of the present invention is a consumable component sales system that sells, at an electronic store, a plurality of consumable components to be replaced periodically among a number of components constituting a machine, including: an electronic store providing device that provides the electronic store through a communication line to a customer terminal used by a customer, the electronic store providing device includes: a correlation value data receiving unit that receives, from the customer terminal, data representing a correlation value correlated with the degree of consumption of the consumable component; a time-for-replacement estimating unit that estimates the time for replacement at which the degree of consumption of the consumable component reaches a threshold value of the consumable component is required to be replaced, using the correlation value represented by the last data received by the correlation value data receiving unit; a recommended replacement component specifying unit that specifies consumable components among a respective consumable components, of which the time for replacement estimated by the time-for-replacement estimating unit is earlier than the periodic inspection date after the next of the machine as components that are recommended to be replaced on the next periodic inspection date of the machine; a sales page generating unit that generates a web page for selling the consumable components specified by the recommended replacement component specifying unit to the customer; and a web page transmitting unit that transmits the web page generated by the sales page generating unit to the customer terminal.

The electronic store providing device may may further include a replacement-requiring component specifying unit that specifies a consumable component among the consumable components specified by the recommended replacement component specifying unit, of which the time for replacement estimated by the time-for-replacement estimating unit is earlier than the next periodic inspection date of the machine as a component requiring replacement on the next periodic inspection date of the machine. The sales page generating unit may generate a web page configured to allow the customer to understand each of the consumable components specified by the recommended replacement component specifying unit, and among the consumable components thereof, the consumable component specified by the replacement-requiring component specifying unit corresponds to.

The electronic store providing device may further include a date-of-replacement data receiving unit that receives data representing a replacement date when the consumable component is replaced from the customer terminal, a replacement date information storage unit that stores a replacement date represented by the data received by the date-of-replacement data receiving unit as aging information of the corresponding consumable component, a replacement frequency calculating unit that calculates the frequency of replacement of the consumable component from the interval of the respective replacement dates of the consumable component, stored in the replacement date information storage unit, a frequency-based time-for-replacement estimating unit that estimates the next time for replacement from the frequency calculated by the replacement frequency calculating unit when the consumable component is replaced with the calculated frequency, and a frequency-based replacement component specifying unit that specifies consumable components among the consumable components other than the consumable components specified by the recommended replacement component specifying unit, of which the time for replacement estimated by the frequency-based time-for-replacement estimating unit is earlier than the periodic inspection date after the next of the machine when the consumable components are replaced with the present replacement frequency, as components that are replaced on the next periodic inspection date of the machine. The sales page generating unit may generate a web page configured to allow the customer to further understand the consumable components specified by the frequency-based replacement component specifying unit correspond to.

The electronic store providing device may further include a work flow page generating unit that generates a web page including digital contents representing the flow of a work of replacing the consumable components specified by the recommended replacement component specifying unit. The web page transmitting unit may transmit the web page generated by the work flow page generating unit concurrently to the customer terminal.

The work flow page generating unit may further generate a web page including digital contents representing the flow of a work of replacing the consumable components specified by the frequency-based replacement component specifying unit.

The electronic store providing device may further include an estimate calculating unit that calculates an estimate for the work of replacing the consumable components specified by the recommended replacement component specifying unit using the prices thereof, and an estimate page generating unit that generates a web page for presenting information on the estimate calculated by the estimate calculating unit to the customer. The web page transmitting unit may transmit the web page generated by the estimate page generating unit concurrently to the customer terminal.

The estimate calculating unit may calculate the estimate by further using working hours required for the work of replacing the consumable components specified by the recommended replacement component specifying unit.

The estimate calculating unit may calculate the estimate for the work of replacing the consumable components by further using the prices of the consumable components specified by the frequency-based replacement component specifying unit.

The estimate calculating unit may calculate the estimate by further using the working hours required for the work of replacing the consumable components specified by the frequency-based replacement component specifying unit.

An electronic store providing device of the present invention is an electronic store providing device that provides, through a communication line, an electronic store that sells a plurality of consumable components that is required to be replaced periodically among a number of components constituting a machine to a customer terminal used by a customer, including: a correlation value data receiving unit that receives, from the customer terminal, data representing a correlation value correlated with the degree of consumption of the consumable component; a time-for-replacement estimating unit that estimates the time for replacement at which the degree of consumption of the consumable component reaches a threshold value of the consumable component is required to be replaced, using the correlation value represented by the last data received by the correlation value data receiving unit, a recommended replacement component specifying unit that specifies consumable components among the respective consumable components, of which the time for replacement estimated by the time-for-replacement estimating unit is earlier than the periodic inspection date after the next of the machine as components that are recommended to be replaced on the next periodic inspection date of the machine, a sales page generating unit that generates a web page for selling the consumable components specified by the recommended replacement component specifying unit to the customer, and a web page transmitting unit that transmits the web page generated by the sales page generating unit to the customer terminal.

A control method of the present invention is a control method for controlling an electronic store providing device that provides, through a communication line, an electronic store that sells a plurality of consumable components that is required to be replaced periodically among a number of components constituting a machine to a customer terminal used by a customer, including: a correlation value data receiving step of receiving, from the customer terminal, data representing a correlation value correlated with the degree of consumption of the consumable component; a time-for-replacement estimating step of estimating the time for replacement at which the degree of consumption of the consumable component reaches a threshold value at which the consumable component is to be replaced, using the correlation value represented by the last data received in the correlation value data receiving step, a recommended replacement component specifying step of specifying consumable components among a respective consumable components, of which the time for replacement estimated in the time-for-replacement estimating step is earlier than the periodic inspection date after the next of the machine as components that are recommended to be replaced on the next periodic inspection date of the machine, a sales page generating step of generating a web page for selling the consumable components specified in the recommended replacement component specifying step to the customer, and a web page transmitting step of transmitting the web page generated in the sales page generating step to the customer terminal.

A program of the present invention is a program for an electronic store providing device that provides, through a communication line, an electronic store that sells a plurality of consumable components that is required to be replaced periodically among a number of components constituting a machine to a customer terminal used by a customer, the program causing the electronic store providing device to function as: a correlation value data receiving unit that receives, from the customer terminal, data representing a correlation value correlated with the degree of consumption of the consumable component; a time-for-replacement estimating unit that estimates the time for replacement at which the degree of consumption of the consumable component reaches a threshold value at which the consumable component is required to be replaced, using the correlation value represented by the last data received by the correlation value data receiving unit, a recommended replacement component specifying unit that specifies consumable components among a respective consumable components, of which the time for replacement estimated by the time-for-replacement estimating unit is earlier than the periodic inspection date after the next of the machine as components that are recommended to be replaced on the next periodic inspection date of the machine, a sales page generating unit that generates a web page for selling the consumable components specified by the recommended replacement component specifying unit to the customer, and a web page transmitting unit that transmits the web page generated by the sales page generating unit to the customer terminal.

The summary of invention does not necessarily describe all necessary features of the present invention. The present invention may also be a sub-combination of the features described above.

### [Effects of the Invention]

According to the invention, a web page for selling components which are recommended to be replaced on the next periodic inspection date of a machine based on a correlation value correlated with the degree of consumption of a consumable component is provided to a customer. As a result, the customer can understand a component that is recommended to be replaced on the next periodic inspection date of the machine without the need to formulate periodic inspection plans manually.

### BRIEF DESCRIPTION OF THE DRAWINGS

FIG. 1 is a diagram showing an example of a use environment of a consumable component sales system 100 according to an embodiment.
FIG. 2 is a diagram showing an example of a block configuration of a web server 110.
FIG. 3 is a diagram showing an example of the information in a table format, stored in a customer information storage unit 111 of the web server 110.
FIG. 4 is a diagram showing an example of the information in a table format, stored in a machine information storage unit 112 of the web server 110.
FIG. 5 is a diagram showing an example of the information in a table format, stored in a consumable component information storage unit 113 of the web server 110.
FIG. 6 is a diagram showing an example of the information in a table format, stored in a replacement date information storage unit 114 of the web server 110.
FIG. 7 is a diagram showing an example of a web page generated by a machine selection page generating unit 119 of the web server 110.
FIG. 8 is a diagram showing an example of a web page generated by an information input page generating unit 121 of the web server 110.
FIG. 9 is a diagram showing an example of a web page generated by a sales page generating unit 132 of the web server 110.
FIG. 10 is a diagram showing another example of a web page generated by the sales page generating unit 132 of the web server 110.
FIG. 11 is a diagram showing an example of a web page generated by a work flow page generating unit 133 of the web server 110.
FIG. 12 is a diagram showing another example of a web page generated by the work flow page generating unit 133 of the web server 110.
FIG. 13 is a diagram showing an example of a web page generated by an estimate page generating unit 134 of the web server 110.
FIG. 14 is a diagram showing an example of an operation flow of the web server 110 and a customer terminal 140.
FIG. 15 is a diagram showing an example of an operation flow of the web server 110 and the customer terminal 140.
FIG. 16 is a diagram showing an example of a hardware configuration of the web server 110.

### EMBODIMENTS OF THE INVENTION

Hereinafter, an embodiment of the present invention will be described. The embodiment does not limit the invention according to the claims, and all the combinations of the features described in the embodiment are not necessarily essential to means provided by aspects of the invention.

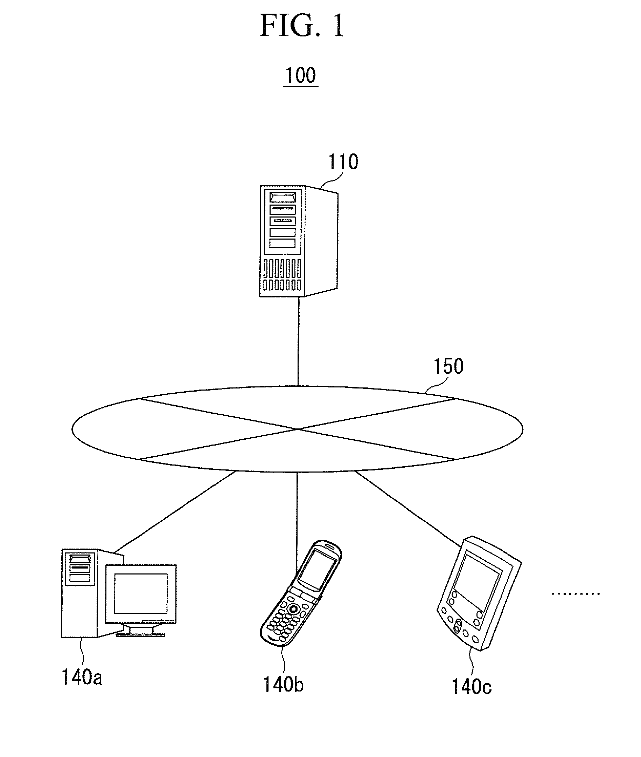

FIG. 1 shows an example of a environment for usage of a consumable component sales system 100 according to an embodiment. The consumable component sales system 100 is a system that sells, at an electronic store, a plurality of consumable components required to be replaced periodically among a number of components constituting a machine. The periodic inspection dates of the respective consumable components are determined by the number of days elapsed after the use start date of the machine and the operation hours after the use start date of the machine. Here, "the number of days elapsed after the use start date of the machine" and "the operation hours after the use start date of the machine" may be an example of a "correlation value" in the invention. In the following description, a forklift is used as an example of a machine.

The consumable component sales system 100 includes a web server 110, a plurality of customer terminals 140a, 140b, 140c, ···, and the like (hereinafter collectively referred to as a customer terminal 140), and a communication line 150. The web server 110 may be an example of an "electronic store providing device" in the invention.

The communication line 150 includes a computer network such as the Internet, a core network of a communication provider, and various local networks. The customer terminal 140 includes a mobile information terminal such as a mobile phone or a personal digital assistants (PDA), and a personal computer.

The web server 110 is a computer that provides an electronic store through the communication line 150 to the customer terminal 140. The web server 110 is managed by a business operator providing the consumable component sales system 100. The customer terminal 140 is a computer that uses the electronic store provided by the web server 110 through the communication line 150. The customer terminal 140 is used by a field engineer that performs maintenance works on a forklift. The field engineer may be an example of a "customer" in the invention.

In the consumable component sales system 100, the web server 110 receives, from the customer terminal 140, data representing the operation hours after the use start date of the forklift. The web server 110 estimates a time for replacement at which the degree of consumption of the consumable component reaches a threshold value at which the consumable component is requiredto be replaced, using the number of days elapsed after the use start date of the forklift, and the operation hours after the use start date of the forklift represented by the last data received from the customer terminal 140. The web server 110 specifies consumable components among the respective consumable components, of which the estimated time for replacement is earlier than the periodic inspection date after the next of the forklift as components that are recommended to be replaced on the next periodic inspection date of the forklift. The web server 110 generates a web page for selling, to the field engineer, the consumable components specified as the components that are recommended to be replaced on the next periodic inspection date of the forklift. And then, the web server 110 transmits the generated web page to the customer terminal 140.

In this way, a web page is displayed on the display of the customer terminal 140, so that consumable components recommended to be replaced on the next periodic inspection date of the forklift can be purchased. As a result, the field engineer can understand consumable components to be replaced on the next periodic inspection date without the need to formulate the periodic inspection plans manually. The consumable components that are recommended to be replaced on the next periodic inspection date of the forklift are components which are specified using the number of days after the shipping of the forklift and the operation hours after the use start date of the forklift, represented by the last data received from the customer terminal 140. Thus, when the field engineer formulating plans on the periodic inspection each time, the field engineer does not need to visit the user of the forklift and acquire data on the operation hours after the use start date of the forklift. For example, when the field engineer visits the user of the forklift in order to peform periodic inspection, acquires the data of the operation hours after the use start date of the forklift, and transmits the data to the web server 110, the field engineer can always understand consumable components to be replaced on the next periodic inspection date.

Moreover, in the consumable component sales system 100, the web server 110 specifies a component among the consumable components specified as the components recommended to be replaced on the next periodic inspection date of the forklift, of which the estimated time for replacement is earlier than the periodic inspection date after the next of the forklift as a component requiring replacement on the next periodic inspection date of the forklift. In this case, when generating the web page, the web server 110 generates a web page configured to allow the field engineer to understand each of the consumable components specified as the components recommended to be replaced on the next periodic inspection date of the forklift, and the consumable component among the consumable components, specified as the component requiring replacement on the next periodic inspection date of the forklift corresponds to.

In this way, a web page configured so as to be able to be understood each component corresponds to either the consumable components recommended to be replaced on the next periodic inspection date of the forklift or the consumable component requiring replacement is displayed on the display of the customer terminal 140. As a result, the field engineer can easily understand each component corresponds to either the consumable components that should be replaced on the next periodic inspection date of the forklift or a consumable component which may be replaced during the period between the periodic inspection date after the next and the next periodic inspection date.

Moreover, in the consumable component sales system 100, the web server 110 receives data, from the customer terminal 140, representing a replacement date when the consumable component was replaced. The web server 110 stores the replacement date represented by the received data in an external storage device as aging information of the corresponding consumable component. The web server 110 calculates the frequency of replacement of the consumable component referring to the interval of the respective replacement dates of the consumable component, stored in the external storage device. The web server 110 estimates the next time for replacement from the calculated frequency in case that the consumable component is replaced with the frequency. The web server 110 specifies consumable components among the consumable components other than the consumable components specified as the components recommended to be replaced on the next periodic inspection date of the forklift, of which the time for replacement estimated using the frequency of replacement of the consumable component is earlier than the periodic inspection date after the next of the forklift as components that are replaced on the next periodic inspection date of the forklift in case that the consumable components are replaced with the present replacement frequency. When generating the web page, the web server 110 generates a web page configured to allow the field engineer to further understand which component, the consumable components specified as the components that are replaced on the next periodic inspection date of the forklift correspond to when the components are replaced with the present replacement frequency.

In this way, a web page configured so that as to be able to be further understood which component, the consumable component that is replaced on the next periodic inspection date of the forklift corresponds to in the case the consumable component is replaced with the present replacement frequency is displayed on the display of the customer terminal 140.
As a result, the field engineer can easily understand the presence of a consumable component that is replaced on the next periodic inspection date of the forklift in case that the consumable component is replaced with the present replacement frequency among the consumable components which are replaced with a shorter frequency than the replacement frequency determined for the consumable components, for example.

Moreover, in the consumable component sales system 100, the web server 110 generates a web page including the work flow of replacing the consumable component specified as the component recommended to be replaced on the next periodic inspection date of the forklift. The web server 110 transmits the generated web page concurrently to the customer terminal 140.

In this way, a web page including the digital contents such as a slideshow, a movie, or a maintenance manual drawing, showing the work flow of replacing the consumable component recommended to be replaced on the next periodic inspection date of the forklift is displayed on the display of the customer terminal 140. As a result, the field engineer can understand the detailed flow of replacing the consumable component recommended to be replaced on the next periodic inspection date of the forklift while viewing the digital contents such as a slideshow, a movie, or a maintenance manual drawing.

Moreover, in the consumable component sales system 100, in case that the consumable component is replaced with the present replacement frequency, the web server 110 further generates a web page including digital contents showing the work flow of replacing the consumable component specified as the component to be replaced on the next periodic inspection date of the forklift.

In this way, on the display of the customer terminal 140, in case that the consumable component is replaced with the present replacement frequency, a web page including digital contents such as a slideshow, a movie, or a maintenance manual drawing is displayed, showing the work flow of replacing the consumable component to be replaced on the next periodic inspection date of the forklift. As a result, in case that the consumable component is replaced with the present replacement frequency, the field engineer can understand the detailed flow of replacing the consumable component to be replaced on the next periodic inspection date of the forklift while viewing digital contents such as a slideshow, a movie, or a maintenance manual drawing.

Moreover, in the consumable component sales system 100, the web server 110 calculates an estimate for the work of replacing the consumable components specified as the components recommended to be replaced on the next periodic inspection date of the forklift using the prices thereof. The web server 110 generates a web page for presenting information on the calculated estimate to the field engineer. The web server 110 transmits the generated web page to the customer terminal 140.

In this way, a web page presenting the estimate for the work of replacing the consumable components recommended to be replaced on the next periodic inspection date of the forklift, to which the prices thereof are applied is displayed on the display of the customer terminal 140. As a result, the field engineer can easily understand the estimate for the work of replacing the consumable components recommended to be replaced on the next periodic inspection date of the forklift.

Moreover, in the consumable component sales system 100, when calculating the estimate, the web server 110 calculates an estimate further using working hours required for the work of replacing the consumable components specified as the components recommended to be replaced on the next periodic inspection date of the forklift.

In this way, a web page presenting the estimate for the work of replacing the consumable components recommended to be replaced on the next periodic inspection date of the forklift, to which the working hours required for the work of replacing the consumable components is applied is displayed on the display of the customer terminal 140. As a result, the field engineer can easily understand the detailed estimate for the work of replacing the consumable components estimated to be replaced on the next periodic inspection date of the forklift.

Moreover, in the consumable component sales system 100, when calculating the estimate, in case that the consumable components are replaced with the present replacement frequency, the web server 110 calculates an estimate for the work of replacing the consumable components specified as components to be replaced on the next periodic inspection date of the forklift further using the prices thereof.

In this way, in case that the consumable components are replaced with the present replacement frequency, a web page presenting the estimate for the work of replacing the consumable components to be replaced on the next periodic inspection date of the forklift to which the prices thereof are further applied is displayed on the display of the customer terminal 140. As a result, in case that the consumable components are replaced with the present replacement frequency, the field engineer can easily understand the estimate for the work of further replacing the consumable components to be replaced on the next periodic inspection date of the forklift.

Moreover, in the consumable component sales system 100, when calculating the estimate, in case that the consumable components are replaced with the present replacement frequency, the web server 110 calculates an estimate further using working hours required for the work of replacing the consumable components specified as the components to be replaced on the next periodic inspection date of the forklift.

In this way, in case that the consumable components are replaced with the present replacement frequency, a web page presenting the estimate for the work of replacing the consumable components to be replaced on the next periodic inspection date of the forklift to which the working hours required for the work of replacing the consumable components is further applied is displayed on the display of the customer terminal 140. As a result, in case that the consumable components are replaced with the present replacement frequency, the field engineer can easily understand the detailed estimate for the work of further replacing the consumable components to be replaced on the next periodic inspection date of the forklift.

In the present embodiment, although the consumable component sales system 100 is described as having one web server 110 for the purpose of preventing the explanation from becoming complicated, the consumable component sales system 100 may include a plurality of web servers 110.

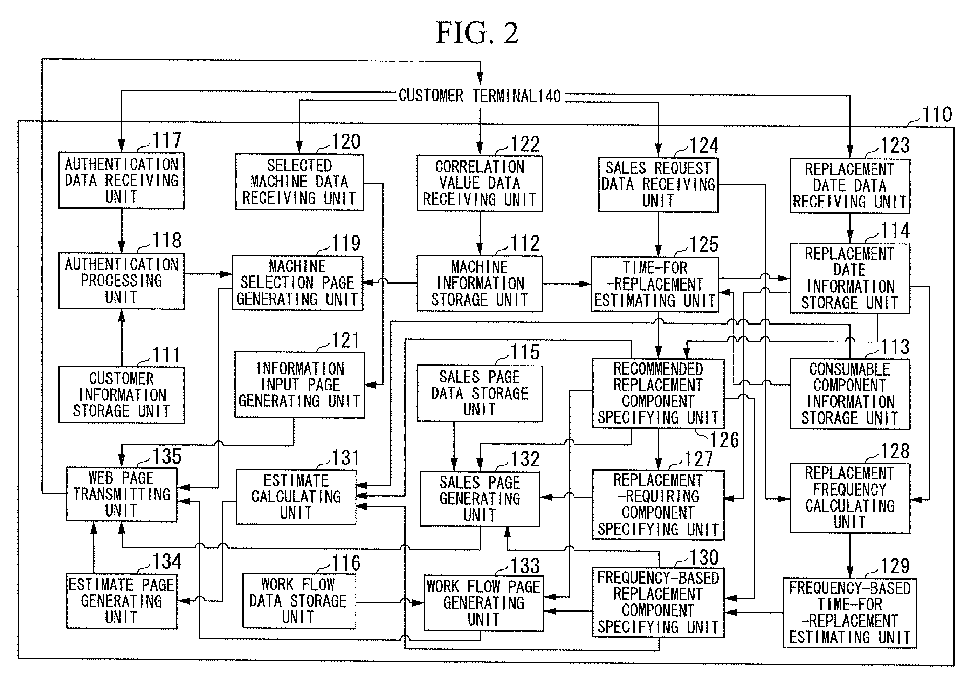

FIG. 2 shows an example of a block configuration of the web server 110. The web server 110 includes a customer information storage unit 111, a machine information storage unit 112, a consumable component information storage unit 113, a replacement date information storage unit 114, a sales page data storage unit 115, a work flow data storage unit 116, an authentication data receiving unit 117, an authentication processing unit 118, a machine selection page generating unit 119, a selected machine data receiving unit 120, an information input page generating unit 121, a correlation value data receiving unit 122, a date-of-replacement data receiving unit 123, a sales request data receiving unit 124, a time-for-replacement estimating unit 125, a recommended replacement component specifying unit 126, a replacement-requiring component specifying unit 127, a replacement frequency calculating unit 128, a frequency-based time-for-replacement estimating unit 129, a frequency-based replacement component specifying unit 130, an estimate calculating unit 131, a sales page generating unit 132, a work flow page generating unit 133, an estimate page generating unit 134, and a web page transmitting unit 135. The function and the operation of each constituent element will be described.

The authentication data receiving unit 117 receives data representing authentication information of the field engineer for using an electronic store, from the customer terminal 140. Specifically, when the authentication data receiving unit 117receives the data representing authentication information of the field engineer, for using the electronic store from the customer terminal 140, the authentication data receiving unit 117 transmits the data to the authentication processing unit 118.

The authentication processing unit 118 performs a process of authenticating the field engineer for using the electronic store. Specifically, when the authentication processing unit 118 receives the data representing the authentication information of the field engineer, for using the electronic store from the authentication data receiving unit 117, the authentication processing unit 118 performs a process of authenticating the field engineer using information stored in the customer information storage unit 111. The authentication processing unit 118 transmits data representing the field engineer to the machine selection page generating unit 119 when it is possible to authenticate the field engineer. On the other hand, the authentication processing unit 118 ends the process when it is not possible to authenticate the field engineer.

The machine selection page generating unit 119 generates a web page for allowing the field engineer to select one forklift among a plurality of forklifts to be subjected to periodic inspection by the field engineer authenticated by the authentication processing unit 118. Specifically, when the machine selection page generating unit 119 receives the data representing the field engineer from the authentication processing unit 118, the machine selection page generating unit 119 generates a web page for allowing the field engineer to select one forklift from a plurality of forklifts to be subjected to periodic inspection by the field engineer represented by the data received from the authentication processing unit 118 using the information stored in the machine information storage unit 112. The machine selection page generating unit 119 transmits data representing the generated web page to the web page transmitting unit 135.

The selected machine data receiving unit 120 receives data representing one forklift selected by the field engineer from the customer terminal 140. Specifically, when the selected machine data receiving unit 120 receives the data representing one forklift selected by the field engineer from the customer terminal 140, the selected machine data receiving unit 120 transmits the data to the information input page generating unit 121.

The information input page generating unit 121 generates a web page for allowing the field engineer to input information on one forklift selected by the field engineer. Specifically, when the information input page generating unit 121 receives the data representing one forklift selected by the field engineer from the selected machine data receiving unit 120, the information input page generating unit 121 generates a web page for allowing the field engineer to input information on the forklift represented by the data. And the information input page generating unit 121 transmits the data representing the generated web page to the web page transmitting unit 135.

The correlation value data receiving unit 122 receives data representing the operation hours after the use start date of the forklift from the customer terminal 140. Specifically, when the correlation value data receiving unit 122 receives the data representing the operation hours after the use start date of the forklift from the customer terminal 140, the correlation value data receiving unit 122 update the information stored in the machine information storage unit 112 with respect to the operation hours after the use start date of the forklift, represented by the data.

The date-of-replacement data receiving unit 123 receives data, from the customer terminal 140, representing the replacement date when the consumable component was replaced. Specifically, the date-of-replacement data receiving unit 123 receives the data representing the replacement date when the consumable component was replaced from the customer terminal 140, the date-of-replacement data receiving unit 123 updates the information stored in the replacement date information storage unit 114 with respect to the replacement date when the consumable component was replaced, represented by the data.

The sales request data receiving unit 124 receives the data representing a sales request for components from the customer terminal 140. Specifically, when the sales request data receiving unit 124 receives the data representing the sales request for components from the customer terminal 140, the sales request data receiving unit 124 transmits data representing the notice to the time-for-replacement estimating unit 125 and the replacement frequency calculating unit 128.

The time-for-replacement estimating unit 125 estimates the time for replacement at which the degree of consumption of a consumable component reaches a threshold value at which the consumable component is required to be replaced using the operation hours after the use start date of the forklift, represented by the last data received by the correlation value data receiving unit 122. Specifically, when the time-for-replacement estimating unit 125 receives the data representing the notice of a sales request for components from the sales request data receiving unit 124, the time-for-replacement estimating unit 125 estimates the time for replacement at which the degree of consumption of the consumable component reaches a threshold value at which the consumable component is required to be replaced using the information stored in the machine information storage unit 112 and the consumable component information storage unit 113. And the time-for-replacement estimating unit 125 updates the information stored in the replacement date information storage unit 114 with respect to the estimated time for replacement. And then, the time-for-replacement estimating unit 125 transmits data representing that the information stored in the replacement date information storage unit 114 has been updated to the recommended replacement component specifying unit 126.

The recommended replacement component specifying unit 126 specifies consumable components among the respective consumable components, of which the time for replacement estimated by the time-for-replacement estimating unit 125 is earlier than the periodic inspection date after the next of the forklift as components recommended to be replaced on the next periodic inspection date of the forklift. Specifically, the recommended replacement component specifying unit 126 receives the data, from the time-for-replacement estimating unit 125, representing that the information stored in the replacement date information storage unit 114 has been updated, the recommended replacement component specifying unit 126 specifies consumable components among the respective consumable components, of which the time for replacement estimated by the time-for-replacement estimating unit 125 is earlier than the periodic inspection date after the next of the forklift as components recommended to be replaced on the next periodic inspection date of the forklift using the information stored in the replacement date information storage unit 114. The recommended replacement component specifying unit 126 transmits data representing the specified consumable components to the replacement-requiring component specifying unit 127, the frequency-based replacement component specifying unit 130, the estimate calculating unit 131, the sales page generating unit 132, and the work flow page generating unit 133.

The replacement-requiring component specifying unit 127 specifies consumable components among the consumable components specified by the recommended replacement component specifying unit 126, of which the time for replacement estimated by the time-for-replacement estimating unit 125 is earlier than the next periodic inspection date of the forklift as components requiring replacement on the next periodic inspection date of the forklift. Specifically, when the replacement-requiring component specifying unit 127 receives the data representing the consumable components from the recommended replacement component specifying unit 126, the replacement-requiring component specifying unit 127 specifies consumable components among the consumable components represented by the data received from the recommended replacement component specifying unit 126, of which the time for replacement estimated by the time-for-replacement estimating unit 125 is earlier than the next periodic inspection date of the forklift as components requiring replacement on the next periodic inspection date of the forklift using the information stored in the replacement date information storage unit 114. And the replacement-requiring component specifying unit 127 transmits data representing the specified consumable components to the sales page generating unit 132.

The replacement frequency calculating unit 128 calculates the frequency of replacement of the consumable component from the interval of the respective replacement dates of the consumable component, stored in the replacement date information storage unit 114. Specifically, when the replacement frequency calculating unit 128 receives the data representing the notice of the sales request for components from the sales request data receiving unit 124, the replacement frequency calculating unit 128 calculates the frequency of replacement of the consumable component from the interval of the respective replacement dates of the consumable component, stored in the replacement date information storage unit 114. The replacement frequency calculating unit 128 transmits data representing the calculated frequency to the frequency-based time-for-replacement estimating unit 129.

The frequency-based time-for-replacement estimating unit 129 estimates the next time for replacement from the frequency calculated by the replacement frequency calculating unit 128 when the consumable component is replaced with the frequency. Specifically, when the frequency-based time-for-replacement estimating unit 129 receives the data representing the frequency from the replacement frequency calculating unit 128, the frequency-based time-for-replacement estimating unit 129 estimates the next time for replacement from the frequency represented by the data when the consumable component is replaced with the frequency. And the frequency-based time-for-replacement estimating unit 129 transmits the data representing the estimated time for replacement to the frequency-based replacement component specifying unit 130.

The frequency-based replacement component specifying unit 130 specifies consumable components of which the time for replacement estimated by the frequency-based time-for-replacement estimating unit 129 is earlier than the periodic inspection date after the next of the forklift among the consumable components other than the consumable components specified by the recommended replacement component specifying unit 126, as components to be replaced on the next periodic inspection date of the forklift when the consumable components are replaced with the present replacement frequency. Specifically, the frequency-based replacement component specifying unit 130 receives data representing consumable components from the recommended replacement component specifying unit 126. When the frequency-based replacement component specifying unit 130 receives the data representing the time for replacement from the frequency-based time-for-replacement estimating unit 129, the frequency-based replacement component specifying unit 130 specifies consumable components of which the time for replacement estimated by the frequency-based time-for-replacement estimating unit 129 is earlier than the periodic inspection date after the next of the forklift among the consumable components other than the consumable components represented by the data received from the recommended replacement component specifying unit 126, as components to be replaced on the next periodic inspection date of the forklift when the consumable components are replaced with the present replacement frequency. And the frequency-based replacement component specifying unit 130 transmits the data representing the specified consumable components to the estimate calculating unit 131, the sales page generating unit 132, and the work flow page generating unit 133.

The estimate calculating unit 131 calculates the estimate for the work of replacing the consumable components specified by the recommended replacement component specifying unit 126 using the prices of the consumable components and the working hours required for the work of replacing the consumable components. Specifically, when the estimate calculating unit 131 receives the data representing consumable components from the recommended replacement component specifying unit 126, the estimate calculating unit 131 calculates the estimate for the work of replacing the consumable components represented by the data received from the recommended replacement component specifying unit 126 using the information stored in the consumable component information storage unit 113. And the estimate calculating unit 131 transmits the data representing the information of the calculated estimate to the estimate page generating unit 134.

Moreover, when calculating the estimate, the estimate calculating unit 131 calculate the estimate further using the prices of the consumable components specified by the frequency-based replacement component specifying unit 130 and the working hours required for the work of replacing the consumable components. Specifically, when the estimate calculating unit 131 receives the data representing consumable components from the frequency-based replacement component specifying unit 130, the estimate calculating unit 131 calculates the estimate for the work of further replacing consumable components represented by the data received from the frequency-based replacement component specifying unit 130 using the information stored in the consumable component information storage unit 113.

The sales page generating unit 132 generates a web page for selling the consumable components specified by the recommended replacement component specifying unit 126 to the field engineer. Specifically, when the sales page generating unit 132 receives the data representing consumable components from the recommended replacement component specifying unit 126, the sales page generating unit 132 generates a web page for selling consumable components represented by the data received from the recommended replacement component specifying unit 126 to the field engineer using the data stored in the sales page data storage unit 115. And the sales page generating unit 132 transmits the data representing the generated web page to the web page transmitting unit 135.

Moreover, when generating the web page, the sales page generating unit 132 generates a web page configured to allow the field engineer to understand which component, each of the consumable components specified by the recommended replacement component specifying unit 126 and the consumable components specified by the replacement-requiring component specifying unit 127 corresponds to. Specifically, when the sales page generating unit 132 receives the data representing consumable components from the replacement-requiring component specifying unit 127, the sales page generating unit 132 generates a web page configured to allow the field engineer to understand which component, each of the consumable components represented by the data received from the recommended replacement component specifying unit 126, and among this consumable components, a consumable component represented by the data received from the replacement-requiring component specifying unit 127 corresponds to.

Moreover, when generating the web page, the sales page generating unit 132 generates a web page configured to allow the field engineer to understand which is the consumable component specified by the frequency-based replacement component specifying unit 130 corresponds to. Specifically, when the sales page generating unit 132 receives the data representing consumable components from the frequency-based replacement component specifying unit 130, the sales page generating unit 132 generates a web page configured to allow the field engineer to further understand which component, a consumable component represented by the data corresponds to.

The work flow page generating unit 133 generates a web page including digital contents showing the flow of the work of replacing the consumable components specified by the recommended replacement component specifying unit 126. Specifically, when the work flow page generating unit 133 receives the data representing consumable components from the recommended replacement component specifying unit 126, the work flow page generating unit 133 generates a web page including digital contents showing the flow of the work of replacing a consumable component represented by the data using the data stored in the work flow data storage unit. And the work flow page generating unit 133 transmits the data representing the generated web page to the web page transmitting unit 135.

Moreover, the work flow page generating unit 133 further generates a web page including digital contents showing the flow of the work of replacing the consumable component specified by the frequency-based replacement component specifying unit 130. Specifically, when the work flow page generating unit 133 receives the data representing consumable components from the frequency-based replacement component specifying unit 130, the work flow page generating unit 133 generates a web page including digital contents showing the flow of the work of replacing a consumable component represented by the data using the data stored in the work flow data storage unit. And the work flow page generating unit 133 transmits the data representing the generated web page to the web page transmitting unit 135.

The estimate page generating unit 134 generates a web page for presenting information on the estimate calculated by the estimate calculating unit 131 to the full water warning level. Specifically, when the estimate page generating unit 134 receives the data representing the information on the estimate from the estimate calculating unit 131, the estimate page generating unit 134 generates a web page for presenting the information on the estimate represented by the data to the field engineer. The estimate page generating unit 134 transmits the data representing the generated web page to the web page transmitting unit 135.

The web page transmitting unit 135 transmits the web page generated by the machine selection page generating unit 119 to the customer terminal 140. Specifically, when the web page transmitting unit 135 receives the data representing the web page from the machine selection page generating unit 119, the web page transmitting unit 135 transmits the data to the customer terminal 140.

Moreover, the web page transmitting unit 135 transmits the web page generated by the information input page generating unit 121 to the customer terminal 140. Specifically, when the web page transmitting unit 135 receives the data representing the web page from the information input page generating unit 121, the web page transmitting unit 135 5 transmits the data to the customer terminal 140.

Moreover, the web page transmitting unit 135 transmits the web page generated by the sales page generating unit 132 to the customer terminal 140. Specifically, when the web page transmitting unit 135 receives the data representing the web page from the sales page generating unit 132, the web page transmitting unit 135 transmits the data to the customer terminal 140.

Moreover, the web page transmitting unit 135 transmits the web page generated by the work flow page generating unit 133 concurrently to the customer terminal 140. Specifically, when the web page transmitting unit 135 receives the data representing the web page from the work flow page generating unit 133, the web page transmitting unit 135 transmits the data to the customer terminal 140.

Moreover, the web page transmitting unit 135 transmits the web page generated by the estimate page generating unit 134 concurrently to the customer terminal 140. Specifically, when the web page transmitting unit 135 receives the data representing the web page from the estimate page generating unit 134, the web page transmitting unit 135 transmits the data to the customer terminal 140.

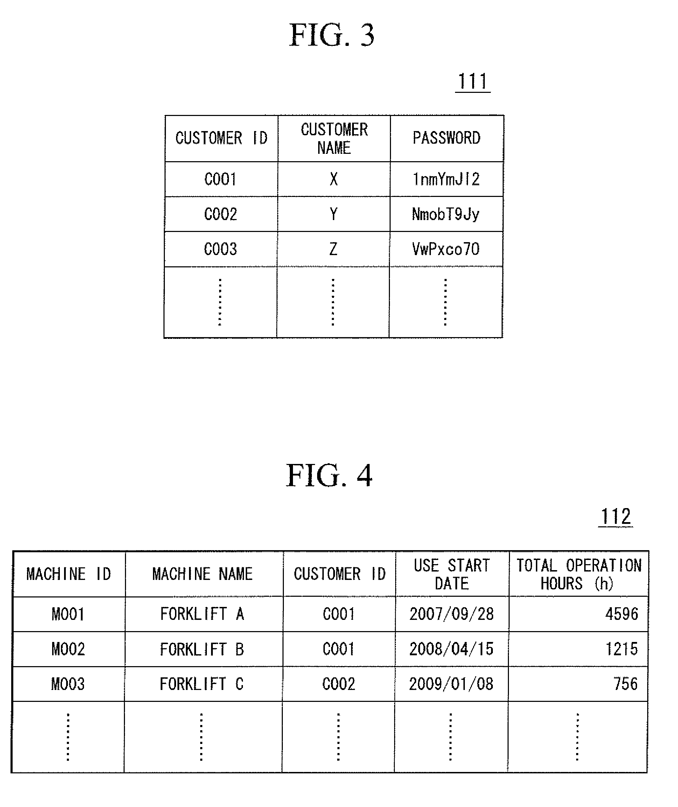

FIG. 3 shows an example of the information in a table format, stored in the customer information storage unit 111 of the web server 110. The customer information storage unit 111 stores a customer ID, a customer name, and a password in a correlated manner.

The customer ID is an identifiction code for uniquely identifying respective field engineers among a plurality of field engineers using the electronic store. The customer name is a language-based symbol given as one corresponding to a field engineer identified by the customer ID in order to distinguish the field engineer from the other field engineers. The password is a private character string used for the field engineer identified by the customer ID to verify himself by user authentication when using the electronic store.

FIG. 4 shows an example of the information in a table format, stored in the machine information storage unit 112 of the web server 110. The machine information storage unit 112 stores a machine ID, a machine name, a customer ID, a use start date, and the total operation hours in a correlated manner.

The machine ID is an identification code for uniquely identifying respective forklifts among a plurality of forklifts managed by a plurality of field engineers using the electronic store. The machine name is a language-based symbol given as one corresponding to a forklift identified by the machine ID in order to distinghish the forklift from the other forklifts. The customer ID is an customer ID representing a field engineer that manages the forklift identified by the machine ID. The use start date is the date when the forklift identified by the machine ID starts to be used. The total operation hours is the operation time after the use start date of the forklift identified by the machine ID.

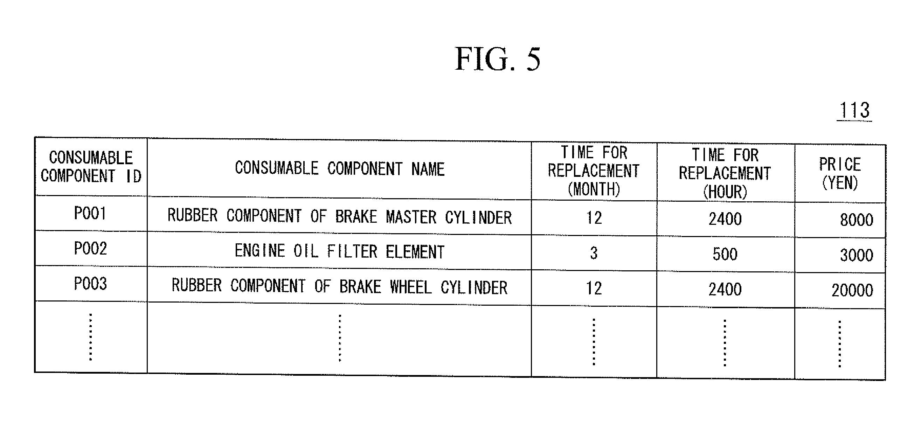

FIG. 5 shows an example of the information in a table format, stored in the consumable component information storage unit 113 of the web server 110. The consumable component information storage unit 113 stores a consumable component ID, a consumable component name, the time for replacement (month), the time for replacement (hour), and the price (Yen) in a correlated manner.

The consumable component ID is an identification code for uniquely identifying respective consumable components among a plurality of consumable components constituting the forklift. The consumable component name is a language-based symbol given as one corresponding to a consumable component identified by the consumable component ID in order to distinghish the consumable component from the other consumable components. The time for replacement (month) is a numeric value representing the interval in month at which the consumable component identified by the consumable component ID is to be replaced after the use start date of the forklift. The time for replacement (hours) is a numeric value representing the interval in hour at which the consumable component identified by the consumable component ID is to be replaced after the use start date of the forklift. The price (Yen) is a numeric value expressed in currency, representing the value of the consumable component identified by the consumable component ID.

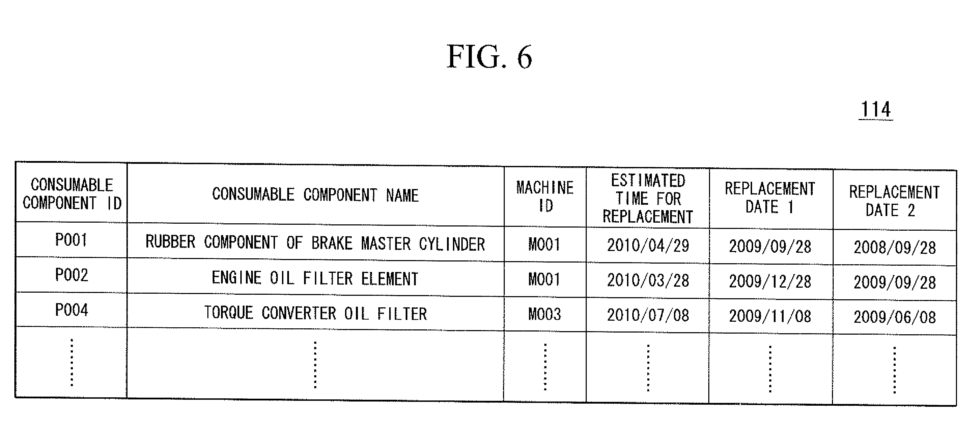

FIG 6 shows an example of the information in a table format, stored in the replacement date information storage unit 114 of the web server 110. The replacement date information storage unit 114 stores a consumable component ID, a consumable component name, a machine ID, an estimated time for replacement, replacement date 1, and replacement date 2 in a correlated manner.

The consumable component ID is an identification code for uniquely identifying respective consumable components among a plurality of consumable components constituting the forklift. The consumable component name is a language-based symbol given as one corresponding to a consumable component identified by the consumable component ID in order to distinguish the consumable component from the other consumable components. The machine ID is an identificaion code for identifying a machine constituted by the consumable component identified by the consumable component ID. The estimated time for replacement is the time at which the degree of consumption of a consumable component identified by the consumable component ID reaches a threshold value at which the consumable component is to be replaced. The replacement date 1 and the replacement date 2 are dates when the consumable component identifed by the consumable component ID is replaced.

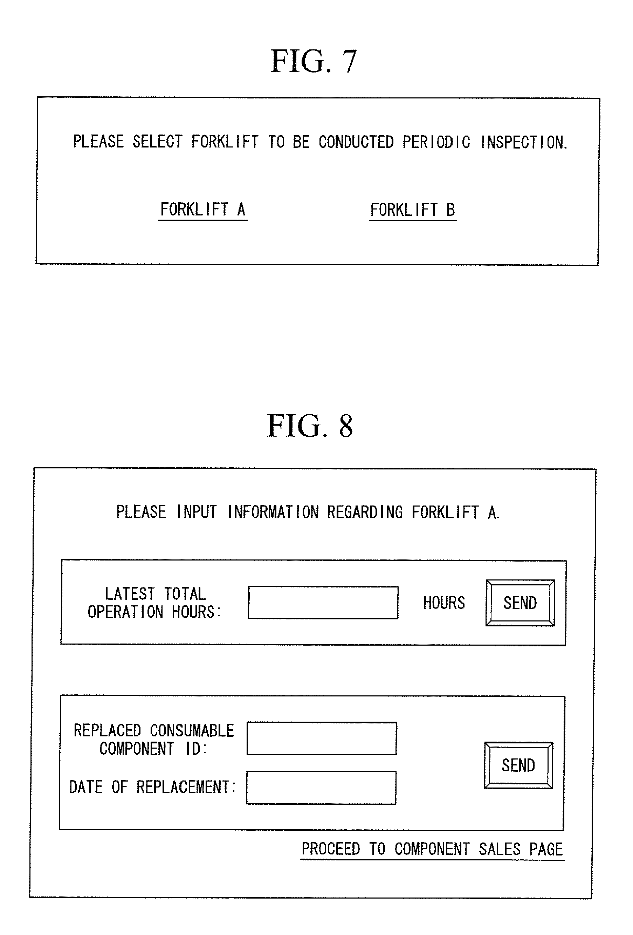

FIG. 7 shows an example of a web page generated by the machine selection page generating unit 119 of the web server 110. Specifically, the web page shown in FIG. 7 includes a plurality of hyperlinks for allowing the field engineer to select one forklift among the forklifts managed by the authenticated field engineer.

FIG. 8 shows an example of a web page generated by the information input page generating unit 121 of the web server 110. Specifically, the web page shown in FIG. 8 includes a text box for inputting a numeric value representing the latest operation hours of the forklift and a send button for transmitting the content input into the text box to the web server. Moreover, the web page shown in FIG. 8 includes two text boxes for inputting a consumable component ID and the date of replacement of a replaced consumable component among a plurality of consumable components constituting a forklift and a send button for transmitting the content input into these text boxes to the web server. Furthermore, the web page shown in FIG. 8 includes a hyperlink to a web page for selling components.

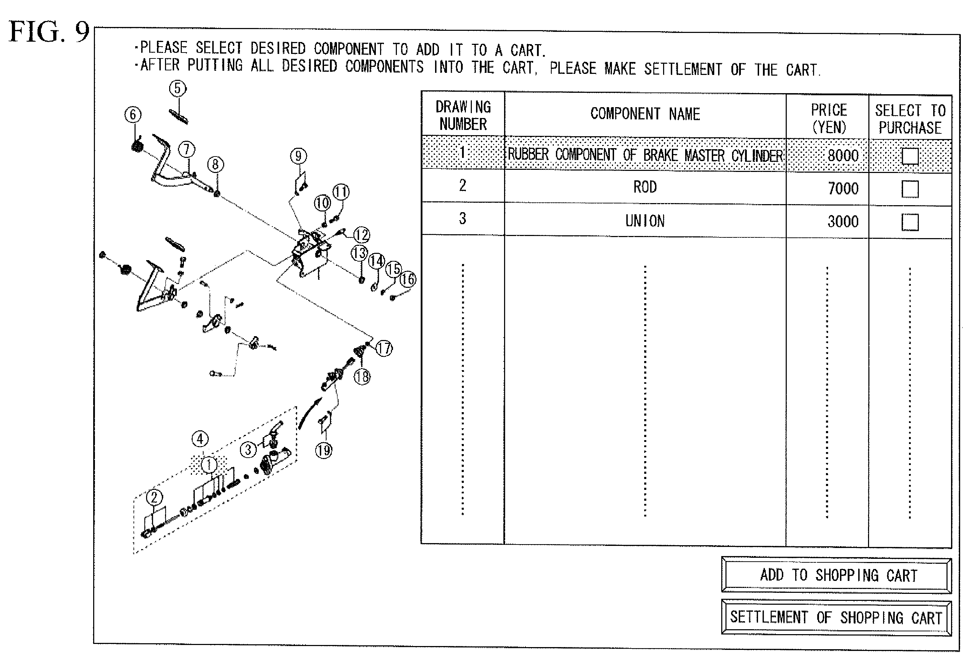

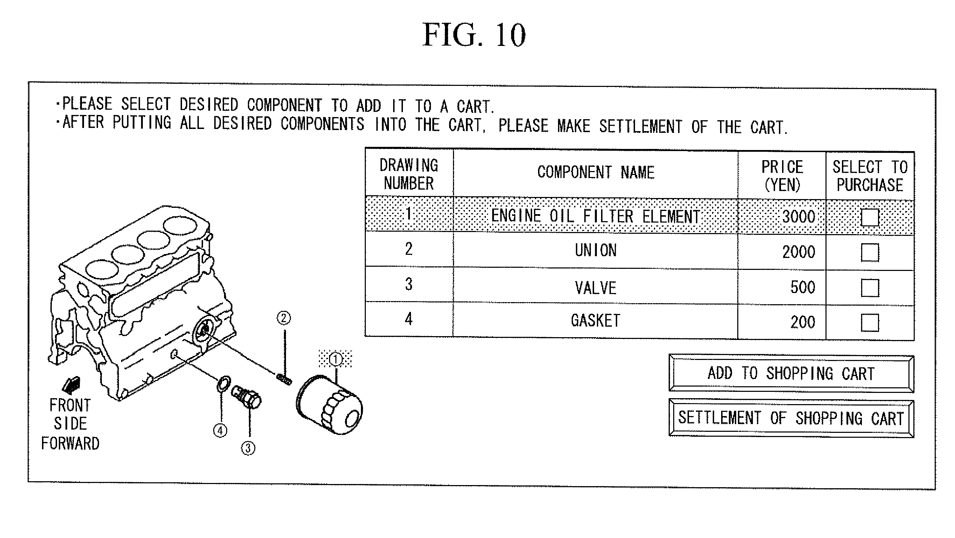

FIGS. 9 and 10 show an example of a web page generated by the sales page generating unit 132 of the web server 110. Specifically, in the web page shown in FIGS. 9 and 10, the drawing of a mechanism including a consumable component and a list of information on the components constituting the mechanism are displayed. The inner side of the frame corresponding to the information of the consumable component within the list of information of components is highlighted. In the drawing of the mechanism, the drawing number of the component is highlighted. In this web page, a checkbox for allowing the field engineer to select a desired component is displayed to the right of the information of the respective components. Furthermore, in this web page, a button for storing components of which the checkboxes are checked in a shopping cart is displayed. Furthermore, in this web page, a button for settlement of the components stored in the shopping cart is displayed.

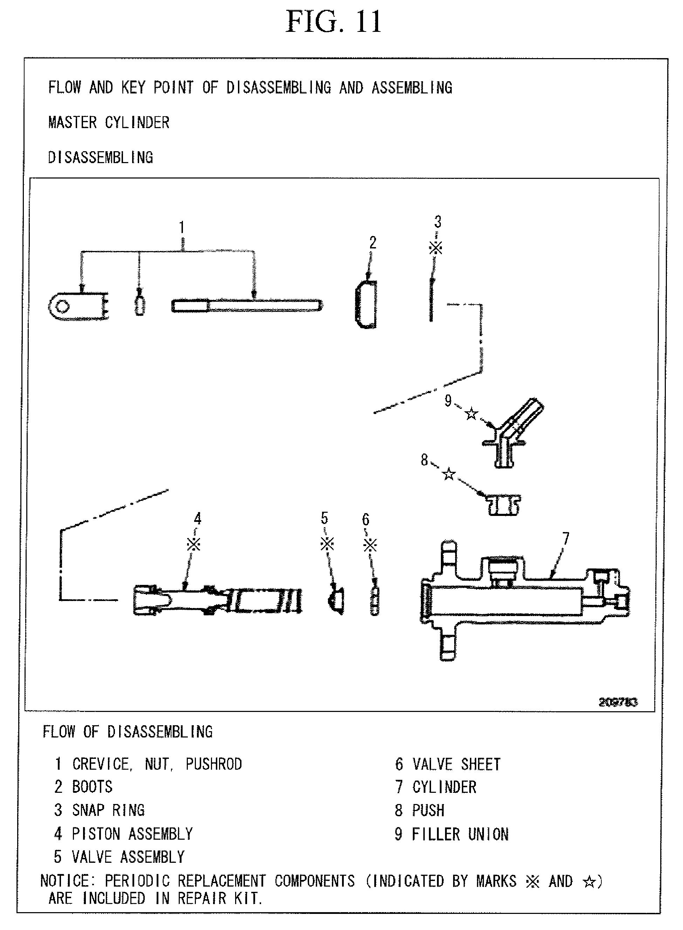

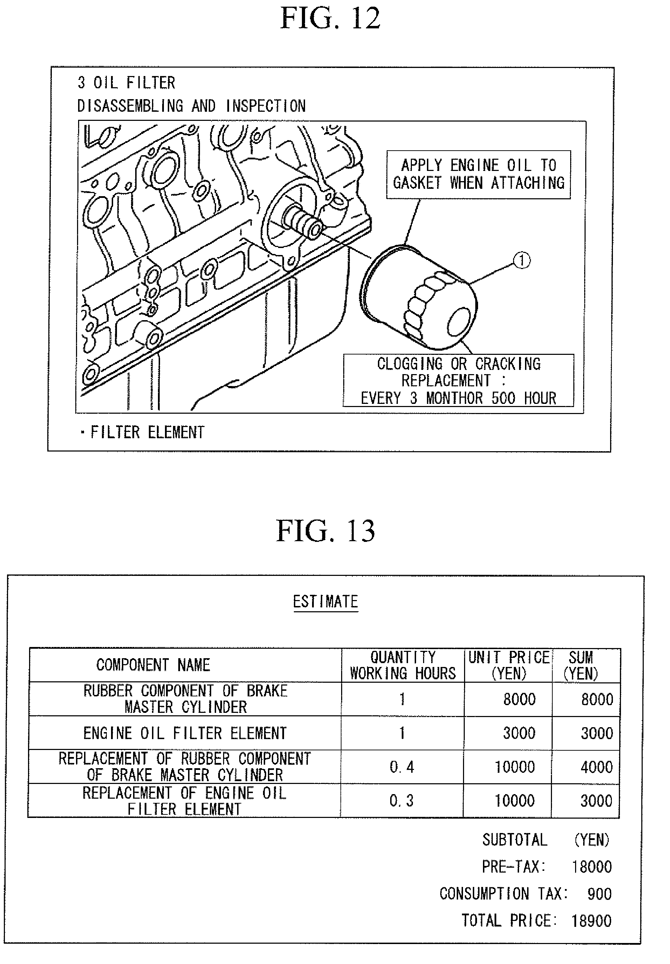

FIGS. 11 and 12 show an example of a web page generated by the work flow page generating unit 133 of the web server 110. Specifically, in the web page shown in FIGS. 11 and 12, the order of replacing a consumable component is shown by digital contents of a maintenance manual drawing.

FIG. 13 shows an example of a web page generated by the estimate page generating unit 134 of the web server 110. Specifically, in the web page shown in FIG. 13, detailed information on the estimate calculated using the prices of components specified as a component required to be replaced and the working hours for the maintenance type for replacing the components is displayed.

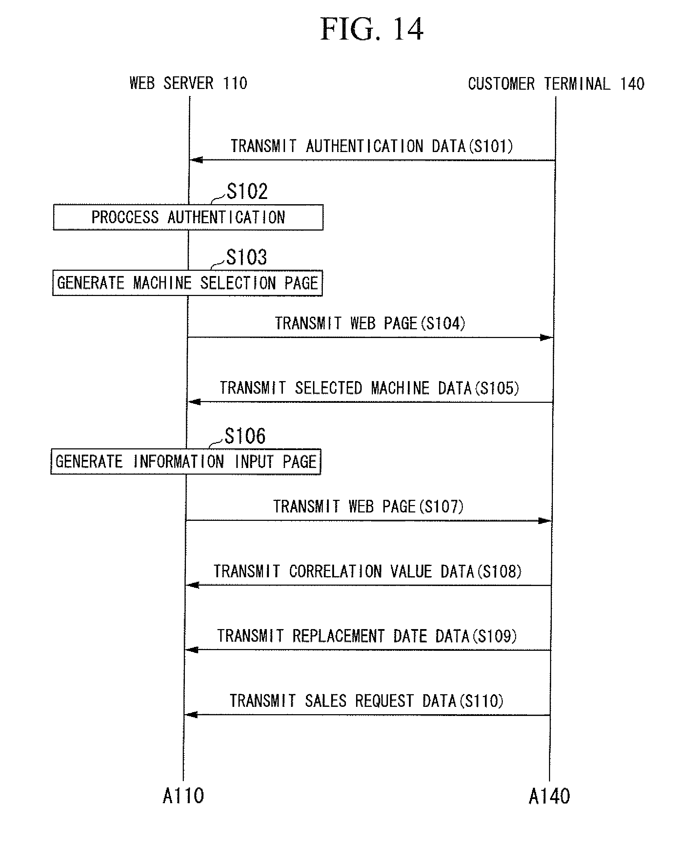

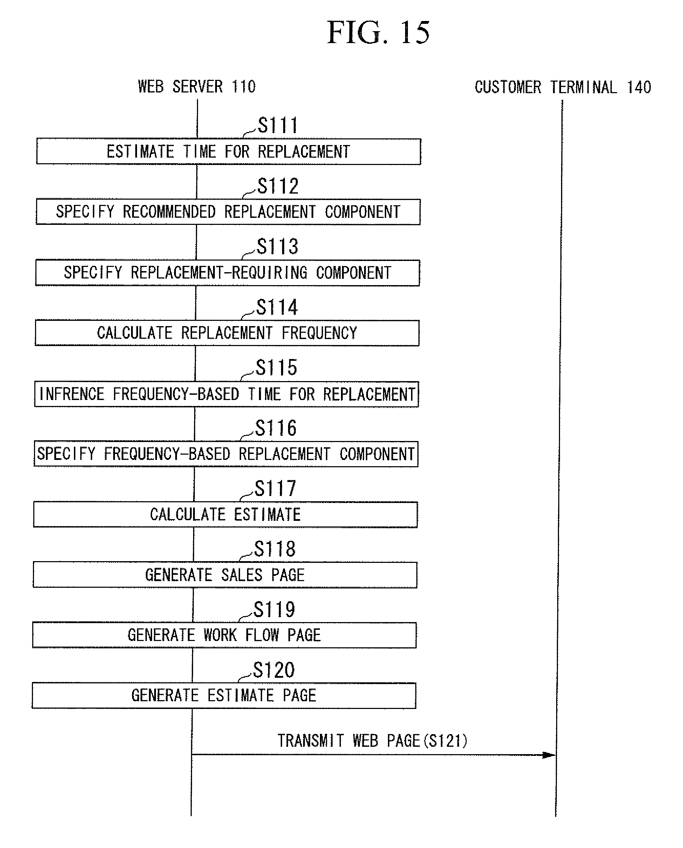

FIGS. 14 and 15 show an example of an operation sequence of the web server 110 and the customer terminal 140. The operation sequence of the web server 110 and the customer terminal 140 will be described with reference to FIGS. 1 to 13.

When the customer terminal 140 receives the input of data representing authentication information of a field engineer, for using an electronic store, the customer terminal 140 transmits the data to the web server 110 (S101). When the authentication data receiving unit 117 of the web server 110 receives the data representing the authentication information of the field engineer, for using the electronic store from the customer terminal 140, the authentication data receiving unit 117 transmits the data to the authentication processing unit 118. For example, When the customer terminal 140 receive the input of data representing a customer ID "C001" and a password "1nmYnJ12", the customer terminal 140 transmits the data to the web server 110. When the authentication data receiving unit 117 receives the data representing a customer ID "C001" and a password "1nmYnJ12" from the customer terminal 140, the authentication data receiving unit 117 transmits the data to the authentication processing unit 118.

When the authentication processing unit 118 of the web server 110 receives the data representing the authentication information of the field engineer, for using the electronic store from the authentication data receiving unit 117, the authentication processing unit 118 of the web server 110 performs a process of authenticating the field engineer using the information stored in the customer information storage unit 111 (S102). The authentication processing unit 118 transmits the data representing the field engineer to the machine selection page generating unit 119 when it was possible to authenticate the field engineer. On the other hand, the authentication processing unit 118 ends the process when it was not possible to authenticate the field engineer. For example, when the authentication processing unit 118 of the web server 110 receives the data representing a customer ID "C001" and a password "1nmYmJ12" from the authentication data receiving unit 117, the authentication processing unit 118 authenticates a customer name "X" of which the customer ID and the password are identical to "C001" and "1nmYmJ12," respectively, within the information stored in the customer information storage unit 111.
And the authentication processing unit 118 transmits data representing the customer ID "C001" of the customer name "X" to the machine selection page generating unit 119.

When the machine selection page generating unit 119 of the web server 110 receives the data representing the field engineer from the authentication processing unit 118, the machine selection page generating unit 119 generates a web page for allowing the field engineer to select one forklift among a plurality of forklifts to be subjected to periodic inspection by the field engineer represented by the data received from the authentication processing unit 118 using the information stored in the machine information storage unit 112 (S103). And the machine selection page generating unit 119 transmits the data representing the generated web page to the web page transmitting unit 135. For example, when the machine selection page generating unit 119 receives the data representing a customer ID "C001" from the authentication processing unit 118, the machine selection page generating unit 119 generates a web page as shown in FIG. 7, for allowing the field engineer to select one forklift among the machine name "Forklift A" of the machine ID "M001" and the machine name "Forklift B" of the machine ID "M002" correlated with the customer ID "C001" using the information stored in the machine information storage unit 112. And the machine selection page generating unit 119 transmits the web page as shown in FIG. 7 to the web page transmitting unit 135.

When the web page transmitting unit 135 of the web server 110 receives the data representing the web page from the machine selection page generating unit 119, the web page transmitting unit 135 transmits the data to the customer terminal 140 (S104). For example, when the web page transmitting unit 135 receives the data representing the web page as shown in FIG 7 from the machine selection page generating unit 119, the web page transmitting unit 135 transmits the data to the customer terminal 140.

In this way, on the display of the customer terminal 140, the web page as shown in FIG. 7 is displayed by a web browser. When the customer terminal 140 receives the input of data representing one forklift selected by the field engineer through the web page, the customer terminal 140 transmits the data to the web server 110 (S105). When the selected machine data receiving unit 120 of the web server 110 receives the data representing one forklift selected by the field engineer from the customer terminal 140, the selected machine data receiving unit 120 transmits the data to the information input page generating unit 121. For example, when a forklift of a machine name "Forklift A" is selected by the field engineer, the customer terminal 140 receives the input of data representing a machine ID "M001" of the machine name "Forklift A". And the customer terminal 140 transmits data representing the machine ID "M001" to the web server 110. When the selected machine data receiving unit 120 receives the data representing the machine ID "M001" from the customer terminal 140, the selected machine data receiving unit 120 transmits the data to the information input page generating unit 121.

When the information input page generating unit 121 of the web server 110 receives the data representing one forklift selected by the field engineer from the selected machine data receiving unit 120, the information input page generating unit 121 generates a web page for allowing the field engineer to input information on the forklift represented by the data (S106). The information input page generating unit 121 transmits the data representing the generated web page to the web page transmitting unit 135. For example, when the information input page generating unit 121receives the data representing a machine ID "M001" from the selected machine data receiving unit 120, the information input page generating unit 121 generates a web page as shown in FIG. 8, for allowing the field engineer to input information on a machine name "Forklift A". And the information input page generating unit 121 transmits the data representing the web page as shown in FIG. 8 to the web page transmitting unit 135.

When the web page transmitting unit 135 of the web server 110 receives the data representing the web page from the information input page generating unit 121, the web page transmitting unit 135 transmits the data to the customer terminal 140 (S107). For example, when the web page transmitting unit 135 receives the data representing the web page as shown in FIG. 8 from the information input page generating unit 121, the web page transmitting unit 135 transmits the data to the customer terminal 140.

In this way, on the display of the customer terminal 140, the web page as shown in FIG. 8 is displayed by a web browser. When the customer terminal 140 receives the input of data representing the operation hours after the use start date of the forklift through the web page, the customer terminal 140 transmits the data to the web server 110 (S108). When the correlation value data receiving unit 122 of the web server 110 receives the data representing the operation hours after the use start date of the forklift from the customer terminal 140, the correlation value data receiving unit 122 updates the information stored in the machine information storage unit 112 with respect to the operation hours after the use start date of the forklift, represented by the data. For example, when the customer terminal 140 receives the input of data representing the operation hours "4596 (h)" after the use start date of the forklift of the machine ID "M001" through the web page as shown in FIG. 8, the customer terminal 140 transmits the data to the web server 110. When the correlation value data receiving unit 122 receives the data representing the operation hours "4596 (h)" after the use start date of the forklift of the machine ID "M001" from the customer terminal 140, the correlation value data receiving unit 122 updates the total operation hours correlated with the machine ID "M001" within the information stored in the machine information storage unit 112 with the total operation hours "4596 (h)".

Moreover, when the customer terminal 140 receives the input of data representing the replacement date when the consumable component was replaced through the web page as shown in FIG. 8, the customer terminal 140 transmits the data to the web server 110 (S109). When the date-of-replacement data receiving unit 123 of the web server 110 receives the data representing the replacement date when the consumable component was replaced from the customer terminal 140, the date-of-replacement data receiving unit 123 updates the information stored in the replacement date information storage unit 114 with respect to the replacement date of the consumable component, represented by the data. For example, when the customer terminal 140 receives the input of data representing the replacement date "2009/09/28" of the consumable component corresponding to a consumable component ID "P001" of a forklift of the machine ID "M001" through the web page as shown in FIG. 8, the customer terminal 140 transmits the data to the web server 110. When the date-of-replacement data receiving unit 123 receives the data representing the replacement date "2009/09/28" of the consumable component corresponding to the consumable component ID "P001" of the forklift of the machine ID "M001" from the customer terminal 140, the date-of-replacement data receiving unit 123 updates the replacement date 1 of the consumable component ID "P001" correlated with the machine ID "M001" within the information stored in the replacement date information storage unit 114 with replacement date 1 "2009/09/28".

Moreover, upon receiving the input of data representing a sales request for components through the web page as shown in FIG. 8, the customer terminal 140 transmits the data to the web server 110 (S110). Upon receiving the data representing the sales request for components from the customer terminal 140, the sales request data receiving unit 124 of the web server 110 transmits data representing the notice to the time-for-replacement estimating unit 125 and the replacement frequency calculating unit 128.

Upon receiving the data representing the notice of the sales request for components from the sales request data receiving unit 124, the time-for-replacement estimating unit 125 of the web server 110 estimates the time for replacement at which the degree of consumption of the consumable component reaches a threshold value at which the consumable component is to be replaced using the information stored in the machine information storage unit 112 and the consumable component information storage unit 113 (S111). The time-for-replacement estimating unit 125 updates the information stored in the replacement date information storage unit 114 with respect to the estimated time for replacement. The time-for-replacement estimating unit 125 transmits data representing that the information stored in the replacement date information storage unit 114 has been updated to the recommended replacement component specifying unit 126. For example, upon receiving the data representing the notice of the sales request for components from the sales request data receiving unit 124, the time-for-replacement estimating unit 125 acqures a system date of the web server 110. It is assumed that the system date was "2010/03/20". The time-for-replacement estimating unit 125 calculate the next time for replacement based on the time for replacement (month) of the respective consumable components by referring to the information stored in the machine information storage unit 112 and the information stored in the consumable component information storage unit 113. In the case of this example, the next time for replacement of the consumable component ID "P001" is "2010/09/28". Moreover, the time-for-replacement estimating unit 125 calculates the next time for replacement based on the time for replacement (hour) of the respective consumable components by referring to the information stored in the machine information storage unit 112 and the information stored in the consumable component information storage unit 113. In the case of this example, the next time for replacement of the consumable component ID "P001" is "2010/04/29" which is about 40 days after "2010/03/20" where 40 (days) ≈ (2400 (time for replacement)) - (4596 (total operation hours)) - 2400 (time for replacement))/(4596 (total operation hours)/904 (total number of days elapsed)). As above, the candidate for the next time for replacement of the consumable component ID "P001" is "2010/09/28" or "2010/04/29". Thus, the time-for-replacement estimating unit 125 estimates that the next time for replacement of the consumable component ID "P001" is "2010/04/29".

The time-for-replacement estimating unit 125 updates the estimated time for replacement of the consumable component ID "P001" within the information stored in the replacement date information storage unit 114 with the estimated time for replacement "2010/04/29". After performing such a process on all consumable components corresponding to the machine ID "M001", the time-for-replacement estimating unit 125 transmits data representing that the information stored in the replacement date information storage unit 114 has been updated to the recommended replacement component specifying unit 126.

When the recommended replacement component specifying unit 126 of the web server 110 receives, from the time-for-replacement estimating unit 125, the data representing that the information stored in the replacement date information storage unit 114 has been updated, the recommended replacement component specifying unit 126 specifies the consumable components among the respective consumable components, of which the time for replacement estimated by the time-for-replacement estimating unit 125 is earlier than the periodic inspection date after the next of the forklift as components recommended to be replaced on the next periodic inspection date of the forklift using the information stored in the replacement date information storage unit 114 (S112). The recommended replacement component specifying unit 126 transmits the data representing the specified consumable components to the replacement-requiring component specifying unit 127, the frequency-based replacement component specifying unit 130, the estimate calculating unit 131, the sales page generating unit 132, and the work flow page generating unit 133. For example, when the periodic inspection date after the next of the forklift is "2010/04/30", the recommended replacement component specifying unit 126 specifies components of the consumable component IDs "P001" and "P002" as components that are recommended to be replaced on the next periodic inspection date of the forklift. And the recommended replacement component specifying unit 126 transmits data representing the consumable component IDs "P001" and "P002" to the replacement-requiring component specifying unit 127, the frequency-based replacement component specifying unit 130, the estimate calculating unit 131, the sales page generating unit 132, and the work flow page generating unit 133.

When the replacement-requiring component specifying unit 127 of the web server 110 receives the data representing consumable components from the recommended replacement component specifying unit 126, the replacement-requiring component specifying unit 127 specifies a consumable component among the consumable components represented by the data received from the recommended replacement component specifying unit 126, of which the time for replacement estimated by the time-for-replacement estimating unit 125 is earlier than the next periodic inspection date of the forklift as a component requiring replacement on the next periodic inspection date of the forklift using the information stored in the replacement date information storage unit 114 (S113). And the replacement-requiring component specifying unit 127 transmits data representing the specified consumable component to the sales page generating unit 132. For example, when the next periodic inspection date of the forklift is "2010/03/30", the replacement-requiring component specifying unit 127 specifies a component corresponding to the consumable component ID "P002" as a component requiring replacement on the next periodic inspection date of the forklift. And the replacement-requiring component specifying unit 127 transmits data representing the consumable component ID "P002" to the sales page generating unit 132.

When the replacement frequency calculating unit 128 of the web server 110 receives the data representing the notice of the sales request for components from the sales request data receiving unit 124, the replacement frequency calculating unit 128 calculate the frequency of replacement of the consumable component from the interval of the respective replacement dates of the consumable component, stored in the replacement date information storage unit 114 (S114). And the replacement frequency calculating unit 128 transmits data representing the calculated frequency to the frequency-based time-for-replacement estimating unit 129.

When the frequency-based time-for-replacement estimating unit 129 of the web server 110 receives the data representing the frequency from the replacement frequency calculating unit 128, the frequency-based time-for-replacement estimating unit 129 estimates the next time for replacement from the frequency represented by the data when the consumable component is replaced with the frequency (S115). And the frequency-based time-for-replacement estimating unit 129 transmits the data representing the estimated time for replacement to the frequency-based replacement component specifying unit 130.

The frequency-based replacement component specifying unit 130 of the web server 110 receives the data representing consumable components from the recommended replacement component specifying unit 126. When the frequency-based replacement component specifying unit 130 receives the data representing the time for replacement from the frequency-based time-for-replacement estimating unit 129, the frequency-based replacement component specifying unit 130 specifies a consumable component of which the time for replacement estimated by the frequency-based time-for-replacement estimating unit 129 is earlier than the periodic inspection date after the next of the forklift among the consumable components other than the consumable components represented by the data received from the recommended replacement component specifying unit 126, as a component requiring replacement on the next periodic inspection date of the forklift when the component is replaced with the present replacement frequency (S116). And the frequency-based replacement component specifying unit 130 transmits data representing the specified consumable component to the estimate calculating unit 131, the sales page generating unit 132, and the work flow page generating unit 133.

When the estimate calculating unit 131 of the web server 110 receives the data representing consumable components from the recommended replacement component specifying unit 126, the estimate calculating unit 131 calculates the estimate for the work of replacing consumable components represented by the data received from the recommended replacement component specifying unit 126 using the information stored in the consumable component information storage unit 113 (S117). And the estimate calculating unit 131 transmits data representing the calculated estimate to the estimate page generating unit 134. For example, When the estimate calculating unit 131 receives the data representing consumable component IDs "P001" and "P002" from the recommended replacement component specifying unit 126, the estimate calculating unit 131 calculates the estimate for the work of replacing consumable components represented by the data received from the recommended replacement component specifying unit 126 using the information stored in the consumable component information storage unit 113. And the estimate calculating unit 131 transmits data representing information on the calculated estimate to the estimate page generating unit 134.

Moreover, when the estimate calculating unit 131 receives the data representing consumable components from the frequency-based replacement component specifying unit 130, the estimate calculating unit 131 calculates the estimate for the work of further replacing consumable components represented by the data received from the frequency-based replacement component specifying unit 130 using the information stored in the consumable component information storage unit 113.

When the sales page generating unit 132 of the web server 110 receives the data representing consumable components from the recommended replacement component specifying unit 126, the sales page generating unit 132 generates a web page for selling consumable components represented by the data received from the recommended replacement component specifying unit 126 to the field engineer using the data stored in the sales page data storage unit 115 (S118). In this case, when the sales page generating unit 132 receives the data representing consumable components from the replacement-requiring component specifying unit 127, the sales page generating unit 132 generates a web page configured to allow the field engineer to understand which component, each of the consumable components represented by the data received from the recommended replacement component specifying unit 126, and among this consumable components, a consumable component represented by the data received from the replacement-requiring component specifying unit 127 corresponds to. Moreover, when the sales page generating unit 132 receives the data representing consumable components from the frequency-based replacement component specifying unit 130, the sales page generating unit 132 generates a web page configured to allow the field engineer to further understand which component is a consumable component represented by the data corresponds to. And the sales page generating unit 132 transmits data representing the generated web page to the web page transmitting unit 135. For example, when the sales page generating unit 132 receives the data representing the consumable component ID "P001" from the recommended replacement component specifying unit 126, the sales page generating unit 132 generates a web page as shown in FIG. 9. Moreover, upon receiving data representing the consumable component ID "P002" from the recommended replacement component specifying unit 126 and the replacement-requiring component specifying unit 127, the sales page generating unit 132 generates a web page as shown in FIG. 10.

When the work flow page generating unit 133 of the web server 110 receives the data representing consumable components from the recommended replacement component specifying unit 126, the work flow page generating unit 133 generates a web page including digital contents showing the flow of the work of replacing consumable components represented by the data using the data stored in the work flow data storage unit (S 119). Moreover, upon receiving the data representing consumable components from the frequency-based replacement component specifying unit 130, the work flow page generating unit 133 generates a web page including digital contents showing the flow of the work of replacing a consumable component represented by the data using the data stored in the work flow data storage unit. The work flow page generating unit 133 transmits the data representing the generated web page to the web page transmitting unit 135. For example, upon receiving data representing a consumable component ID "P001" from the recommended replacement component specifying unit 126, the work flow page generating unit 133 generates a web page as shown in FIG. 11. Moreover, upon receiving data representing a consumable component ID "P002" from the recommended replacement component specifying unit 126, the work flow page generating unit 133 generates a web page as shown in FIG. 12.

When the estimate page generating unit 134 of the web server 110 receives the data representing the information on the estimate from the estimate calculating unit 131, the estimate page generating unit 134 generates a web page for presenting the information on the estimate represented by the data to the field engineer (S 120). The estimate page generating unit 134 transmits the data representing the generated web page to the web page transmitting unit 135. For example, the estimate page generating unit 134 generates a web page as shown in FIG. 13.

The web page transmitting unit 135 of the web server 110 receives data representing a web page from the sales page generating unit 132. Moreover, the web page transmitting unit 135 receives data representing a web page from the work flow page generating unit 133. Furthermore, the web page transmitting unit 135 receives data representing a web page from the estimate page generating unit 134. And then, the web page transmitting unit 135 transmits these data to the customer terminal 140. For example, the web page transmitting unit 135 receives date representing a web page as shown in FIGS. 9 and 10 from the sales page generating unit 132. Moreover, the web page transmitting unit 135 receives data representing a web page as shown in FIGS. 11 and 12 from the work flow page generating unit 133. Furthermore, the web page transmitting unit 135 receives data representing a web page as shown in FIG. 13 from the estimate page generating unit 134. And then, the web page transmitting unit 135 transmits these data to the customer terminal 140.

In this way, on the display of the customer terminal 140, the web pages as shown in FIGS. 9 to 13 are displayed by a web browser.

As described above, in the consumable component sales system 100, a web page as shown in FIG. 9 is displayed on the display of the customer terminal 140, so that consumable components recommended to be replaced on the next periodic inspection date of the forklift can be purchased. As a result, the field engineer can understand consumable components to be replaced on the next periodic inspection date without the need to formulate the periodic inspection plans manually. The consumable components that are recommended to be replaced on the next periodic inspection date of the forklift are components which are specified using the number of days after the shipping of the forklift and the operation hours after the use start date of the forklift, represented by the last data received from the customer terminal 140. Thus, the field engineer does not need to visit the user of the folklift and acquire data on the operation hours after the use start date of the forklift everytime when the field engineer formulates plans on the periodic inspection. For example, when the field engineer visits the user of the forklift in order to peform periodic inspection, acquires the data of the operation hours after the use start date of the forklift, and transmits the data to the web server 110, the field engineer can always understand consumable components to be replaced on the next periodic inspection date.

Moreover, in the consumable component sales system 100, a web page as shown in FIGS. 9 and 10, configured so that so as to be able to be understood each component corresponds to either the consumable components recommended to be replaced on the next periodic inspection date of the forkliftor the consumable component requiring replacement is displayed on the display of the customer terminal 140. As a result, the field engineer can easily understand each component corresponds to either the consumable components that should be replaced on the next periodic inspection date of the forkliftor a consumable component which may be replaced during the period between the periodic inspection date after the next and the next periodic inspection date.

Moreover, in the consumable component sales system 100, a web page configured so that so as to be able to be further understood which component corresponds to the consumable component that is replaced on the next periodic inspection date of the forklift when the consumable component is replaced with the present replacement frequency is displayed on the display of the customer terminal 140. As a result, the field engineer can easily understand the presence of a consumable component that is replaced on the next periodic inspection date of the forklift when the consumable component is replaced with the present replacement frequency among the consumable components which are replaced with a shorter frequency than the replacement frequency determined for the consumable components, for example.

Moreover, in the consumable component sales system 100, a web page as shown in FIGS. 11 and 12, including the digital contents such as a slideshow, a movie, or a maintenance manual drawing, showing the work flow of replacing the consumable component recommended to be replaced on the next periodic inspection date of the forklift is displayed on the display of the customer terminal 140. As a result, the field engineer can understand the detailed flow of replacing the consumable component recommended to be replaced on the next periodic inspection date of the forklift while viewing the digital contents such as a slideshow, a movie, or a maintenance manual drawing.

Moreover, in the consumable component sales system 100, a web page showing the work flow of replacing the consumable component to be replaced on the next periodic inspection date of the forklift when the consumable component is replaced with the present replacement frequency, including digital contents such as a slideshow, a movie, or a maintenance manual drawing is displayed on the display of the customer terminal 140. As a result, the field engineer can understand the detailed flow of replacing the consumable component to be replaced on the next periodic inspection date of the forklift when the consumable component is replaced with the present replacement frequency while viewing digital contents such as a slideshow, a movie, or a maintenance manual drawing.

Moreover, in the consumable component sales system 100, a web page as shown in FIG. 13, presenting the estimate for the work of replacing the consumable components recommended to be replaced on the next periodic inspection date of the forklift, to which the prices thereof are applied is displayed on the display of the customer terminal 140. As a result, the field engineer can easily understand the estimate for the work of replacing the consumable components recommended to be replaced on the next periodic inspection date of the forklift.

Moreover, in the consumable component sales system 100, a web page as shown in FIG. 13, presenting the estimate for the work of replacing the consumable components recommended to be replaced on the next periodic inspection date of the forklift, to which the working hours required for the work of replacing the consumable components is further applied is displayed on the display of the customer terminal 140. As a result, the field engineer can easily understand the detailed estimate for the work of replacing the consumable components estimated to be replaced on the next periodic inspection date of the forklift.

Moreover, in the consumable component sales system 100, a web page presenting the estimate for the work of replacing the consumable components to be replaced on the next periodic inspection date of the forklift when the consumable components are replaced with the present replacement frequency, to which the prices thereof are further applied is displayed on the display of the customer terminal 140. As a result, the field engineer can easily understand the estimate for the work of further replacing the consumable components to be replaced on the next periodic inspection date of the forklift when the consumable components are replaced with the present replacement frequency.

Moreover, in the consumable component sales system 100, a web page presenting the estimate for the work of replacing the consumable components to be replaced on the next periodic inspection date of the forklift when the consumable components are replaced with the present replacement frequency, to which the working hours required for the work of replacing the consumable components is further applied is displayed on the display of the customer terminal 140. As a result, the field engineer can easily understand the detailed estimate for the work of further replacing the consumable components to be replaced on the next periodic inspection date of the forklift when the consumable components are replaced with the present replacement frequency.

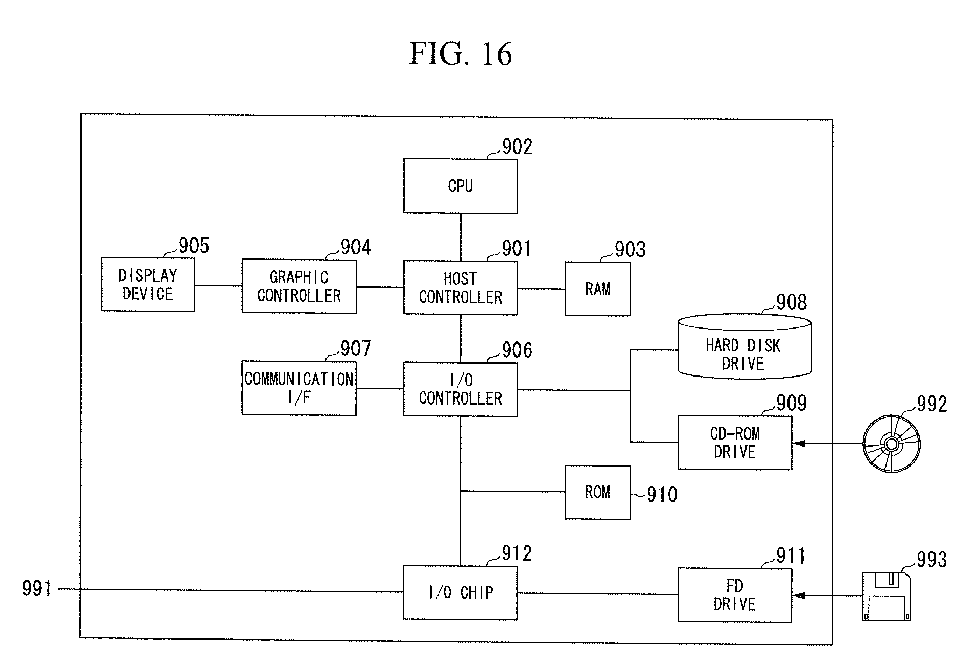

FIG. 16 shows an example of a hardware configuration when the web server 110 is configured as an electronic information processing device such as a computer. The web server 110 includes a central processing unit (CPU) peripheral device, an input/output unit, and a legacy input/output unit. The CPU peripheral device includes a CPU 902, a random access memory (RAM) 903, a graphic controller 904, and a display device 905 which are connected to each other by a host controller 901. The input/output unit includes a communication interface 907, a hard disk drive 908, and a compact disk read only memory (CD-ROM) drive 909 which are connected to the host controller 901 by an input/output controller 906. The legacy input/output unit includes a read only memory (ROM) 910, a flexible disk drive 911, and an input/output chip 912 which are connected to the input/output controller 906.

The host controller 901 connects the RAM 903 to the CPU 902 accessing the RAM 903 at a high data rate and to the graphic controller 904. The CPU 902 operates based on programs stored in the ROM 910 and the RAM 903 so as to control respective units. The graphic controller 904 acquires image data which the CPU 902 or the like generates on a frame buffer provided in the RAM 903 and displays the image data on the display device 905. Alternatively, the graphic controller 904 may include a frame buffer for storing the image data generated by the CPU 902 or the like.

The input/output controller 906 connects the host controller 901 to the hard disk drive 908, the communication interface 907, and the CD-ROM drive 909 which are relatively high-speed input/output devices. The hard disk drive 908 stores programs and data used by the CPU 902. The communication interface 907 connects to a network communication device 991 to thereby transmit and receive programs or data. The CD-ROM drive 909 reads programs or data from a CD-ROM 992 and provides the same to the hard disk drive 908 and the communication interface 907 through the RAM 903.

The input/output controller 906 is connected to the ROM 910, and relatively low-speed input/output devices of the flexible disk drive 911 and the input/output chip 912. The ROM 910 stores a boot program executed when starting the web server 110, programs dependent on the hardware of the web server 110, or the like. The flexible disk drive 911 reads programs or data from the flexible disk 993 and provides the same to the hard disk drive 908 and the communication interface 907 through the RAM 903. The input/output chip 912 connects the flexible disk drive 911 or various input/output devices through a parallel port, a serial port, a keyboard port, a mouse port, or the like.

The programs executed by the CPU 902 are stored in the flexible disk 993, the CD-ROM 992, or a recording medium such as an integrated circuit (IC) card and provided to users. The programs stored in the recording medium may be compressed or not. The programs are installed from the recording medium into the hard disk drive 908, read by the RAM 903, and executed by the CPU 902. The programs executed by the CPU 902 cause the web server 110 to function as the customer information storage unit 111, the machine information storage unit 112, the consumable component information storage unit 113, the replacement date information storage unit 114, the sales page data storage unit 115, the work flow data storage unit 116, the authentication data receiving unit 117, the authentication processing unit 118, the machine selection page generating unit 119, the selected machine data receiving unit 120, the information input page generating unit 121, the correlation value data receiving unit 122, the replacement date data receiving unit 123, the sales request data receiving unit 124, the time-for-replacement estimating unit 125, the recommended replacement component specifying unit 126, the replacement-requiring component specifying unit 127, the replacement frequency calculating unit 128, the frequency-based time-for-replacement estimating unit 129, the frequency-based replacement component specifying unit 130, the estimate calculating unit 131, the sales page generating unit 132, the work flow page generating unit 133, the estimate page generating unit 134, and the web page transmitting unit 135 described in relation to FIGS. 1 to 15.

The programs described above may be stored in an external storage medium. As the storage medium, in addition to the flexible disk 993 and the CD-ROM 992, an optical recording medium such as a digital versatile disk (DVD) or a phase disk (PD), an opto-magnetic recording medium such as a MiniDisk (MD), a tape medium, a semiconductor memory such as an IC card, or the like can be used. Moreover, the consumable component sales system 100 may be provided as a networked program using a storage medium such as a hard disk or a RAM provided in a server system connected to a dedicated communication network or the Internet as a recording medium.

While the embodiment of the present invention has been described, the technical scope of the invention is not limited to the above described embodiment. It is apparent to persons skilled in the art that various alterations and improvements can be added to the above-described embodiment. It is also apparent from the scope of the claims that embodiments added with such alterations or improvements can be included in the technical scope of the invention.

### Industrial Applicability

According to the present invention, it is possible to provide a web page for selling components which are recommended to be replaced on the next periodic inspection date of a machine based on a correlation value correlated with the degree of consumption of a consumable component to a customer. As a result, the customer can understand a component that is recommended to be replaced on the next periodic inspection date of the machine without the need to formulate periodic inspection plans manually.

### [Description of the Referenced Symbols]

100: CONSUMABLE COMPONENT SALES SYSTEM
110: WEB SERVER
111: CUSTOMER INFORMATION STORAGE UNIT
112: MACHINE INFORMATION STORAGE UNIT
113: CONSUMABLE COMPONENT INFORMATION STORAGE UNIT
114: REPLACEMENT DATE INFORMATION STORAGE UNIT
115: SALES PAGE DATA STORAGE UNIT
116: WORK FLOW DATA STORAGE UNIT
117: AUTHENTICATION DATA RECEIVING UNIT
118: AUTHENTICATION PROCESSING UNIT
119: MACHINE SELECTION PAGE GENERATING UNIT
120: SELECTED MACHINE DATA RECEIVING UNIT
121: INFORMATION INPUT PAGE GENERATING UNIT
122: CORRELATION VALUE DATA RECEIVING UNIT
123: REPLACEMENT DATE DATA RECEIVING UNIT
124: SALES REQUEST DATA RECEIVING UNIT
125: TIME-FOR-REPLACEMENT ESTIMATING UNIT
126: RECOMMENDED REPLACEMENT COMPONENT SPECIFYING UNIT
127: REPLACEMENT-REQUIRING COMPONENT SPECIFYING UNIT
128: REPLACEMENT FREQUENCY CALCULATING UNIT
129: FREQUENCY-BASED TIME-FOR-REPLACEMENT ESTIMATING UNIT
130: FREQUENCY-BASED REPLACEMENT COMPONENT SPECIFYING UNIT
131: ESTIMATE CALCULATING UNIT
132: SALES PAGE GENERATING UNIT
133: WORK FLOW PAGE GENERATING UNIT
134: ESTIMATE PAGE GENERATING UNIT
135: WEB PAGE TRANSMITTING UNIT
140: CUSTOMER TERMINAL
150: COMMUNICATION LINE
901: HOST CONTROLLER
902: CPU
903: RAM
904: GRAPHIC CONTROLLER
905: DISPLAY DEVICE
906: INPUT/OUTPUT CONTROLLER
907: COMMUNICATION INTERFACE
908: HARD DISK DRIVE
909: CD-ROM DRIVE
910: ROM
911: FLEXIBLE DISK DRIVE
912: INPUT/OUTPUT CHIP
991: NETWORK COMMUNICATION DEVICE
992: CD-ROM
993: FLEXIBLE DISK

## Claims

1. A consumable component sales system that sells, at an electronic store, a plurality of consumable components to be replaced periodically among a number of components constituting a machine, the consumable component sales system comprising:
an electronic store providing device that provides the electronic store through a communication line to a customer terminal used by a customer,
wherein the electronic store providing device includes:
a correlation value data receiving unit that receives, from the customer terminal, data representing a correlation value correlated with the degree of consumption of the consumable component;
a time-for-replacement estimating unit that estimates the time for replacement at which the degree of consumption of the consumable component reaches a threshold value at which the consumable component is required to be replaced, using the correlation value represented by the last data received by the correlation value data receiving unit;
a recommended replacement component specifying unit that specifies consumable components among a respective consumable components, of which the time for replacement estimated by the time-for-replacement estimating unit is earlier than the periodic inspection date after the next of the machine as components that are recommended to be replaced on the next periodic inspection date of the machine;
a sales page generating unit that generates a web page for selling the consumable components specified by the recommended replacement component specifying unit to the customer; and
a web page transmitting unit that transmits the web page generated by the sales page generating unit to the customer terminal.

2. The consumable component sales system according to claim 1,
wherein the electronic store providing device further includes
a replacement-requiring component specifying unit that specifies a consumable component among the consumable components specified by the recommended replacement component specifying unit, of which the time for replacement estimated by the time-for-replacement estimating unit is earlier than the next periodic inspection date of the machine as a component requiring replacement on the next periodic inspection date of the machine, and
wherein the sales page generating unit generates a web page configured to allow the customer to understand each of the consumable components specified by the recommended replacement component specifying unit, and among the consumable components thereof, the consumable component specified by the replacement-requiring component specifying unit corresponds to.

3. The consumable component sales system according to claim 1,
wherein the electronic store providing device further includes
a date-of-replacement data receiving unit that receives data representing a replacement date when the consumable component was replaced from the customer terminal,
a replacement date information storage unit that stores a replacement date represented by the data received by the date-of-replacement data receiving unit as aging information of the corresponding consumable component,
a replacement frequency calculating unit that calculates the frequency of replacement of the consumable component from the interval of the respective replacement dates of the consumable component, stored in the replacement date information storage unit,
a frequency-based time-for-replacement estimating unit that estimates the next time for replacement from the frequency calculated by the replacement frequency calculating unit when the consumable component is replaced with the calculated frequency, and
a frequency-based replacement component specifying unit that specifies consumable components among the consumable components other than the consumable components specified by the recommended replacement component specifying unit, of which the time for replacement estimated by the frequency-based time-for-replacement estimating unit is earlier than the periodic inspection date after the next of the machine when the consumable components are replaced with the present replacement frequency, as components that are replaced on the next periodic inspection date of the machine, and
wherein the sales page generating unit generates a web page configured to allow the customer to further understand the consumable components specified by the frequency-based replacement component specifying unit correspond to.

4. The consumable component sales system according to claim 1,
wherein the electronic store providing device further includes
a work flow page generating unit that generates a web page including digital contents representing the flow of a work of replacing the consumable components specified by the recommended replacement component specifying unit, and
wherein the web page transmitting unit transmits the web page generated by the work flow page generating unit concurrently to the customer terminal.

5. The consumable component sales system according to claim 4,
wherein the work flow page generating unit further generates a web page including digital contents representing the flow of a work of replacing the consumable components specified by the frequency-based replacement component specifying unit.

6. The consumable component sales system according to claim 1,
wherein the electronic store providing device further includes
an estimate calculating unit that calculates an estimate for the work of replacing the consumable components specified by the recommended replacement component specifying unit using the prices thereof, and
an estimate page generating unit that generates a web page for presenting information on the estimate calculated by the estimate calculating unit to the customer, and
wherein the web page transmitting unit transmits the web page generated by the estimate page generating unit concurrently to the customer terminal.

7. The consumable component sales system according to claim 6,
wherein the estimate calculating unit calculates the estimate by further usingworking hours required for the work of replacing the consumable components specified by the recommended replacement component specifying unit.

8. The consumable component sales system according to claim 6 or 7,
wherein the estimate calculating unit calculates the estimate for the work of replacing the consumable components further using the prices of the consumable components specified by the frequency-based replacement component specifying unit.

9. The consumable component sales system according to claim 8,
wherein the estimate calculating unit calculates the estimate by further using the working hours required for the work of replacing the consumable components specified by the frequency-based replacement component specifying unit.

10. An electronic store providing device that provides, through a communication line, an electronic store that sells a plurality of consumable components that is required to be replaced periodically among a number of components constituting a machine to a customer terminal used by a customer, the electronic store providing device comprising:
a correlation value data receiving unit that receives, from the customer terminal, data representing a correlation value correlated with the degree of consumption of the consumable component;
a time-for-replacement estimating unit that estimates the time for replacement at which the degree of consumption of the consumable component reaches a threshold value at which the consumable component is required to be replaced, using the correlation value represented by the last data received by the correlation value data receiving unit;
a recommended replacement component specifying unit that specifies consumable components among a respective consumable components, of which the time for replacement estimated by the time-for-replacement estimating unit is earlier than the periodic inspection date after the next of the machine as components that are recommended to be replaced on the next periodic inspection date of the machine;
a sales page generating unit that generates a web page for selling the consumable components specified by the recommended replacement component specifying unit to the customer; and
a web page transmitting unit that transmits the web page generated by the sales page generating unit to the customer terminal.

11. A control method for controlling an electronic store providing device that provides, through a communication line, an electronic store that sells a plurality of consumable components that is required to be replaced periodically among a number of components constituting a machine to a customer terminal used by a customer, the control method comprising:
a correlation value data receiving step of receiving, from the customer terminal, data representing a correlation value correlated with the degree of consumption of the consumable component;
a time-for-replacement estimating step of estimating the time for replacement at which the degree of consumption of the consumable component reaches a threshold value at which the consumable component is required to be replaced, using the correlation value represented by the last data received in the correlation value data receiving step;
a recommended replacement component specifying step of specifying consumable components among a respective consumable components, of which the time for replacement estimated in the time-for-replacement estimating step is earlier than the periodic inspection date after the next of the machine as components that are recommended to be replaced on the next periodic inspection date of the machine;
a sales page generating step of generating a web page for selling the consumable components specified in the recommended replacement component specifying step to the customer; and
a web page transmitting step of transmitting the web page generated in the sales page generating step to the customer terminal.

12. A program for an electronic store providing device that provides, through a communication line, an electronic store that sells a plurality of consumable components that is required to be replaced periodically among a number of components constituting a machine to a customer terminal used by a customer, the program causing the electronic store providing device to function as:
a correlation value data receiving unit that receives, from the customer terminal, data representing a correlation value correlated with the degree of consumption of the consumable component;
a time-for-replacement estimating unit that estimates the time for replacement at which the degree of consumption of the consumable component reaches a threshold value at which the consumable component is required to be replaced, using the correlation value represented by the last data received by the correlation value data receiving unit;
a recommended replacement component specifying unit that specifies consumable components among a respective consumable components, of which the time for replacement estimated by the time-for-replacement estimating unit is earlier than the periodic inspection date after the next of the machine as components that are recommended to be replaced on the next periodic inspection date of the machine;
a sales page generating unit that generates a web page for selling the consumable components specified by the recommended replacement component specifying unit to the customer; and
a web page transmitting unit that transmits the web page generated by the sales page generating unit to the customer terminal.
